# EUROPEAN PATENT APPLICATION

(11) **EP 4 738 143 A1**
(43) Date of publication of application: **06.05.2026**
(21) Application number: 25211555.5
(22) Date of filing: 28.10.2025
(51) Int. Cl.: G06F 16/27, G06F 16/95

(54) **BULK API WITH CHUNKED TRANSFER ENCODING FOR CLOUD APPLICATIONS**

(30) Priority: 05.11.2024 US 202418937277
(71) Applicant: SAP SE, 69190 Walldorf (DE)
(72) Inventor: HUANG, Xinrong, Walldorf (DE)
(74) Representative: Müller-Boré & Partner Patentanwälte PartG mbB

(57) **Abstract**

Example methods and systems are directed to a bulk API with chunked transfer encoding for cloud applications. The Replication Management Service (RMS) is a cloud-based application designed to replicate data for a variety of data sources. The RMS provides a collection of RESTful APIs to facilitate the creation and execution of replication tasks. The RMS receives multiple chunks in a REST communication and generates a replication flow in response. Since all replication tasks in a replication flow use the same constellation, the application using the RMS only sends the constellation data once regardless of the number of replication tasks in the replication flow. As a result, the total amount of data transferred between the application and the RMS is reduced whenever multiple replication tasks are performed on the same constellation, reducing network congestion and improving the performance of the cloud-based system.

## Description

### TECHNICAL FIELD

The subject matter disclosed herein generally relates to systems for communicating with cloud applications, and more specifically to a bulk application programming interface (API) with chunked transfer encoding for cloud applications.

### BACKGROUND

Existing applications use multiple API calls to perform multiple tasks. Managing complex sets of tasks requires a substantial number of API calls. Error handling may further increase the number of API calls performed.

### BRIEF DESCRIPTION OF THE DRAWINGS

FIG. 1 shows a network diagram illustrating an example network environment suitable for using a bulk API with chunked transfer encoding for cloud applications.
FIG. 2 shows a block diagram of components suitable for performing database replication using a bulk API with chunked transfer encoding.
FIG. 3 shows a flowchart illustrating a method of implementing a bulk API with chunked transfer encoding for cloud applications, according to some example embodiments.
FIG. 4 shows a flowchart illustrating a method of generating a request for a cloud application using a bulk API with chunked transfer encoding, according to some example embodiments.
FIG. 5 shows a flowchart illustrating a method of handling a request for a cloud application using a bulk API with chunked transfer encoding, according to some example embodiments.
FIG. 6 shows a flowchart illustrating a method of execution of a task created using a bulk API with chunked transfer encoding, according to some example embodiments.
FIG. 7 shows a block diagram showing one example of a software architecture for a computing device.
FIG. 8 shows a block diagram of a machine in the example form of a computer system within which instructions may be executed for causing the machine to perform any one or more of the methodologies discussed herein.

### DETAILED DESCRIPTION

Example methods and systems are directed to a bulk API with chunked transfer encoding for cloud applications. In a microservices application, independent small services provide specific functions. The small services communicate with each other using remote call protocols such as hypertext transport protocol (HTTP) or Google remote procedure call (gRPC). Each service provides a set of APIs using representational state transfer (REST) to communicate with other services. REST is a valuable architectural style for microservices, thanks to its simplicity, flexibility, and scalability. However, the communication between services can be complex. The performance of communication between services appears to be the bottleneck of overall performance in microservices-based systems. Therefore, improving the performance of communication becomes extremely important and is critical to achieving high performance in microservices-based systems.

The Replication Management Service (RMS) is a cloud-based application designed to replicate data for a variety of data sources. It provides a collection of RESTful APIs to facilitate the creation and execution of replication tasks. Task creation refers to the creation of a task definition with essential information. Task execution refers to the action of copying a table from the source to a designated target. Task creation necessitates multiple API calls to spawn related objects. However, with potentially hundreds of tables requiring replication, a considerable number of HTTP requests would need to take place. In addition, cleanup requires additional API calls to delete already created objects if a failure occurs during creation. This presents a challenge for the performance and stability of RMS as a cloud application. An RMS is a central service that manages replication task definitions such as source connection identifier (ID), target connection ID, source table metadata, target table metadata, and the like. The RMS orchestrates replication worker tasks and manages the replication task lifecycle.

As discussed herein, an operation- and transaction-based bulk API with chunked transfer encoding reduces the quantity of requests and the request body size. This improves error handling, thereby advancing overall performance and stability of cloud-based applications.

An RMS operates as a cloud-based application with a central role of replicating data across multiple source types. This is accomplished by deploying an assortment of RESTful APIs integral in generating replication tasks. For clarity, a "task" refers to the definition including essential information for transferring a single table's data from its original source to a designated target. The source and target can be any type of database or file supported by the RMS, such as Azure, HANA, Kafka, object store, or the like.

The RMS makes use of an RMS repository that stores both replication task definitions and replication worker task states. The RMS repository may be implemented as an in-memory database. RMS workers are pipeline graphs that are controlled by a pipeline service. The RMS workers execute replication tasks to perform data replication.

A central connection management service (CCM) provides a central directory for connection information and credentials. The RMS can store connection information and credentials in the CCM for use by the RMS workers.

The following definitions apply to terms used herein.

Space - A space defines a container that contains tables. Example spaces include a schema in a database system and a folder in a file system.

Constellation - A constellation is a logical grouping of one source space and one target space. Replication tasks may be performed by replicating data from the source space of a constellation to the target space of the constellation.

Replication Task - A replication task describes the replication of an object from a source to a target. The replication task may include filters, projections, scheduling information, a transfer mode, a priority, or any suitable combination thereof.

Replication Flow - A replication flow is associated with a constellation and includes one or more replication tasks to replicate tables from the source space of the constellation to the target space of the constellation.

As discussed herein, the RMS receives multiple chunks in a REST communication and generates a replication flow in response. Since all replication tasks in a replication flow use the same constellation, the application using the RMS only sends the constellation data once regardless of the number of replication tasks in the replication flow. As a result, the total amount of data transferred between the application and the RMS is reduced whenever multiple replication tasks are performed on the same constellation, reducing network congestion and improving the performance of the cloud-based system.

Additionally, error handling is streamlined. Using the chunked transfer encoding, all chunks of the REST API are related. If an error occurs in the handling of one chunk, the RMS is aware that the entire replication flow is affected. By contrast, if the application makes individual API calls for each replication task, the RMS and the application must coordinate to determine how to handle the error.

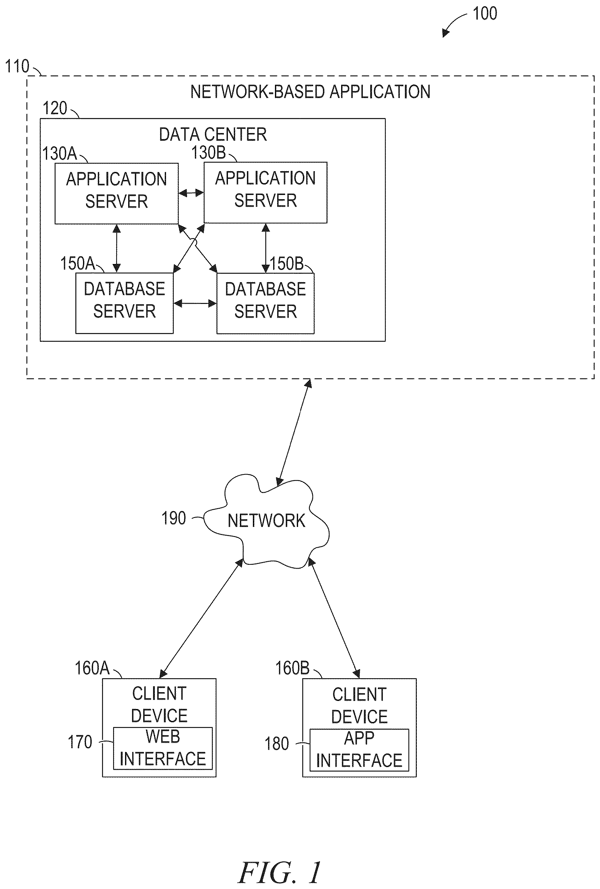

FIG. 1 shows a network diagram illustrating an example network environment 100 suitable for using a bulk API with chunked transfer encoding for cloud applications. The network environment 100 includes a network-based application 110, client devices 160A and 160B, and a network 190. The network-based application 110 is implemented at a data center 120 comprising application servers 130A and 130B in communication with database servers 150A and 150B. An application executing on the application servers 130A-130B may access data from the database servers 150A-150B. The letter suffixes of reference numbers may be omitted when doing so does not raise ambiguity. For example, the application servers 130A-130B may be referred to collectively as "application servers 130." Similarly, when the specific one of the application servers 130A-130B is not of particular import, "application server 130" may be referenced.

The application running on the application server 130 may provide services to the client devices 160A and 160B. For example, a user of the client device 160A may be an employee of a business using a business application. The user may use the services to replicate data from the database server 150A to the database server 150B. Use of the application may entail selecting data sources, selecting data tables, applying filters, or any suitable combination thereof. The user interface for the application may be presented using a web interface 170 or an app interface 180.

The application servers 130 may communicate with the database servers 150 using a REST API, Open Data Protocol (ODATA), or another API. The data may be described in metadata that provides contextual information related to the data. Metadata includes column names, data types, and data relationships. If the values are from a fixed dataset, the dataset may be loaded and the loaded information used as a table description.

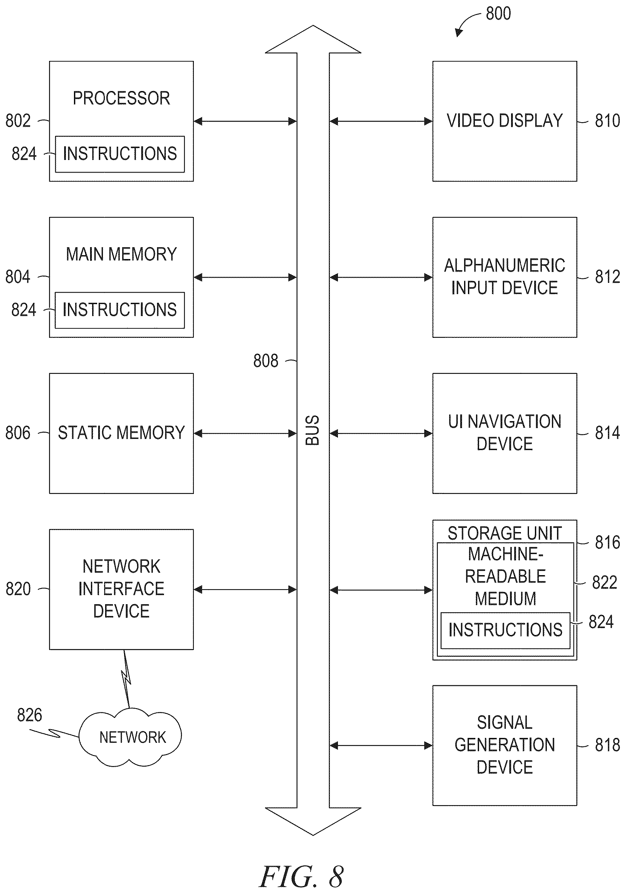

The application servers 130A-130B, the database servers 150A-150B, and the client devices 160A-160B may each be implemented in a computer system, in whole or in part, as described below with respect to FIG. 8. Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 8. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database, a disk-based database, a remote database, or any suitable combination thereof. Moreover, any two or more of the machines, databases, or devices illustrated in FIG. 1 may be combined into a single machine, database, or device, and the functions described herein for any single machine, database, or device may be subdivided among multiple machines, databases, or devices.

The application servers 130A-130B, the database servers 150A-150B, and the client devices 160A-160B are connected by the network 190. The network 190 may be any network that enables communication between or among machines, databases, and devices. Accordingly, the network 190 may be a wired network, a wireless network (e.g., a mobile or cellular network), or any suitable combination thereof. The network 190 may include one or more portions that constitute a private network, a public network (e.g., the Internet), or any suitable combination thereof.

Though FIG. 1 shows only one or two of each element (e.g., two application servers 130A-130B, two client devices 160A and 160B, and the like), any number of each element is contemplated. For example, the application server 130A may be one of dozens or hundreds of active and standby servers and provide services to millions of client devices.

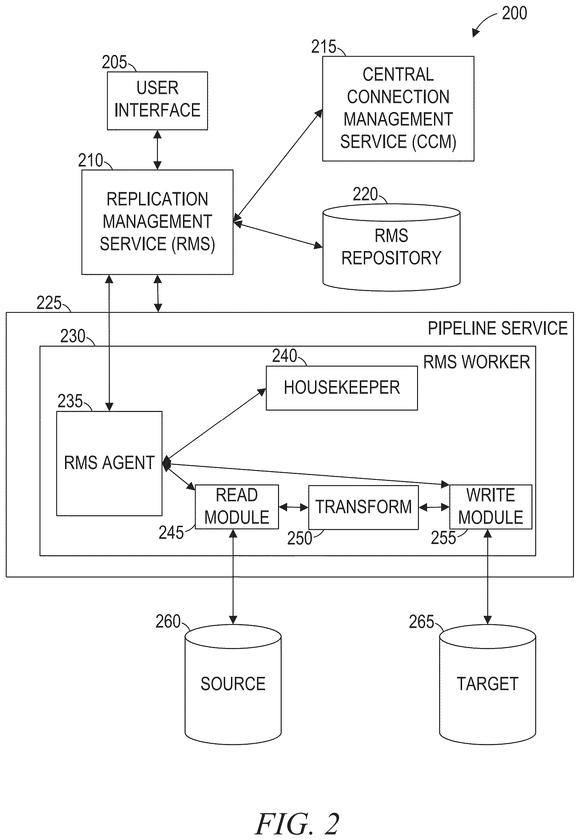

FIG. 2 shows a block diagram 200 of components suitable for performing database replication using a bulk API with chunked transfer encoding. The block diagram 200 includes a user interface 205, a replication management service (RMS) 210, a central connection management service (CCM) 215, an RMS repository 220, a pipeline service 225, a source 260, and a target 265. The pipeline service 225 includes one or more RMS workers 230. Each RMS worker 230 includes an RMS agent 235, a housekeeper 240, a read module 245, a transform module 250, and a write module 255.

The RMS 210 is a central service that receives replication task definitions including information such as source connection ID, target connection ID, source table metadata, or any suitable combination thereof. The RMS 210 orchestrates replication worker tasks and manages the replication task lifecycle.

The RMS repository 220 is a central repository that stores both replication task definitions (design-time data) and replication worker task states (run-time data). The RMS repository 220 may be an in-memory database.

The RMS workers 230 are pipeline graphs that, when executed by the pipeline service 225, perform data replication. The pipeline service 225 is a service that controls execution of graphs.

The CCM 215 is a central service that provides a central directory for connection information and credentials. The connection information and credentials may be accessed from the CCM 215 by the RMS workers 230 to access the source 260, the target 265, or both. The source 260 and the target 265 may be any type of database or file system supported by the RMS 210, such as Azure, HANA, Kafka, object store, and the like.

A user of the user interface 205 identifies one or more tables of the source 260 to be replicated to the target 265. The user interface 205 communicates the replication to be performed to the RMS 210. Data to be used for the replication is provided from the RMS 210 to the CCM 215 and the RMS repository 220. One or more RMS workers 230 perform the replication of data. The reader module 245 reads the data from the source 260. The transform module 250 transforms the data (e.g., by filtering out data, by renaming columns, by performing operations on read data, or any suitable combination thereof). The transformed data is written to the target 265 by the writer module 255. Success or failure of the replication is communicated by the housekeeper 240 to the CCM 215, the RMS repository 220, or both.

Using a single bulk API HTTP request to replicate large numbers of tables (e.g., hundreds of tables) replaces hundreds of individual HTTP requests that would be needed to replicate those tables. When using hundreds of individual HTTP requests, if an error occurs during replication of a table and the entire transaction needs to be rolled back, correctly determining which requests were related is a challenge. By contrast, when the bulk API is used, the requests are clearly related by virtue of being part of the same HTTP request.

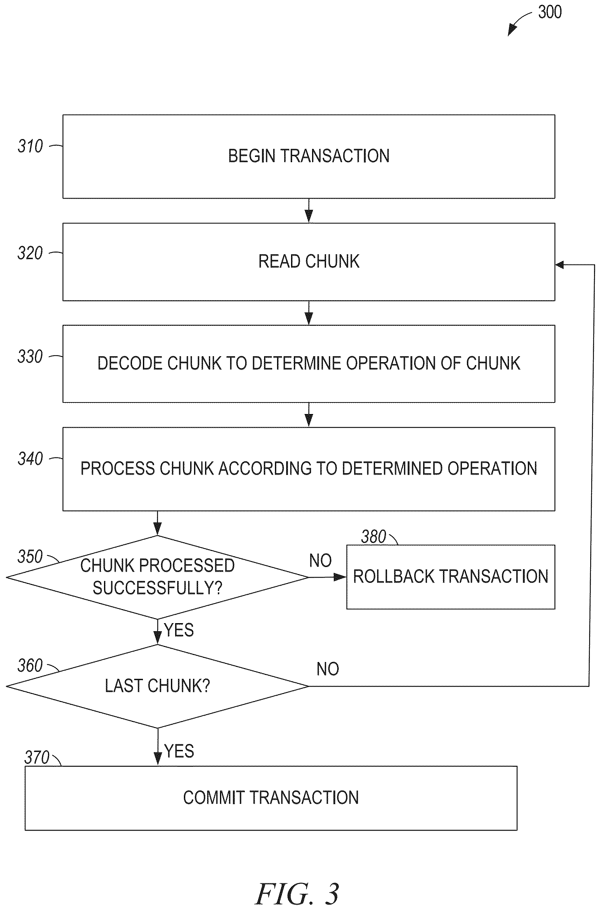

FIG. 3 shows a flowchart illustrating a method 300 of implementing a bulk API with chunked transfer encoding for cloud applications, according to some example embodiments. By way of example and not limitation, the method 300 is described as being performed by the RMS 210 of FIG. 2. The method 300 includes operations 310, 320, 330, 340, 350, 360, 370, and 380.

In operation 310, a transaction begins. The transaction uses a bulk API with chunked transfer encoding. The first chunk is read in operation 320. In operation 330, the chunk is decoded to determine its operation. The chunk is processed according to its operation in operation 340.

Example operations include create source space, create target space, create constellation, add source table, add target table, and create task. The create target space, create constellation, add source table, and add target table operations update data in the RMS repository 220, the CCM 215, or both. The create task operation creates a task definition including essential information for replicating data in a previously defined constellation from a source table previously defined by an add source table operation to a target table previously defined by an add target table operation. The constellation defines the source space for the source table and the target space for the target table.

The create source space operation may be handled by attempting to create a first data object that represents the source space. The create target space operation may be handled by attempting to create a second data object that represents the target space. The create constellation operation may be handled by attempting to create a third data object that represents the constellation. The add source table operation may be handled by attempting to create a fourth data object that represents the source table and add it into the table list of the source space. The add target table operation may be handled by attempting to create a firth data object that represents the target table and add it into the table list of the target space. The create task operation may be handled by attempting to create a sixth data object that represents the task.

In operation 350, the RMS 210 determines if the chunk was processed successfully. If not, the transaction is rolled back (operation 380) and the method 300 ends without committing the previously created data objects to repository. If the chunk was processed successfully, the RMS 210 determines if the chunk is the last chunk of the transaction (operation 360). If so, the method 300 completes by committing the transaction in operation 370. Otherwise, the method 300 continues by returning to operation 320 for processing of the next chunk.

Operations 320-360 are repeated for the remaining chunks in the transaction and the method 300 ends either by rolling back the transaction in operation 380 if any chunk is not processed successfully, or committing the transaction in operation 370 if all chunks are processed successfully.

Operation 370, committing the transaction, is only performed if operation 350 determines that all chunks are processed correctly. Thus, prior to the task creation for copying of the data from the source table in the source space to the target table in the target space, the RMS determines that the attempts to create all six data objects were all successful.

The method 300 may be implemented using the pseudo-code below.

```
 func CreateReplicationFlowHandler(writer *http.Response, request
 *http.Request) {
       transaction.Begin(). // Begin Transaction.
       rf := NewReplicationFlow()
       for chunk := ReadChunk(request) != EOF {
             switch chunk.Operation {
             case "CREATE_SOURCE_SPACE:
                    rf.SourceSpaceID, error =
                    CreateSpace(chunk.payload)
                    if error {break}
             case "CREATE_TARGET_SPACE":
                    rf.TargetSpaceID, error =
                    CreateSpace(chunk.payload)
                    if error {break}
             case "CREATE_CONSTELLATION":
                    rf.ConstellationID, error =
                    CreateConstellation(chunk.payload)
                    if error {break}
             case "ADD_SOURCE_TABLE":
                    error = AddTable(chunk.payload)
                    if error {break}
             case "ADD_TARGET_TABLE":
                    error = AddTable(chunk.payload)
                    if error {break}
             case "CREATE_TASK":
                    error = CreateTask(chunk.payload)
                    if error {break}
                    rf.ReplicationTasks.AddTask(task)
             default:
                    error("unsupported operation")
                    break
              }
       }
       if error {
             transaction.Rollback() // Rollback transaction.
             writer.WriteResponse(500, nil)
       } else {
             transaction.Commit(). // Commit Transaction.
             writer.WriteResponse(200, rf)
       }
       return
 }
```

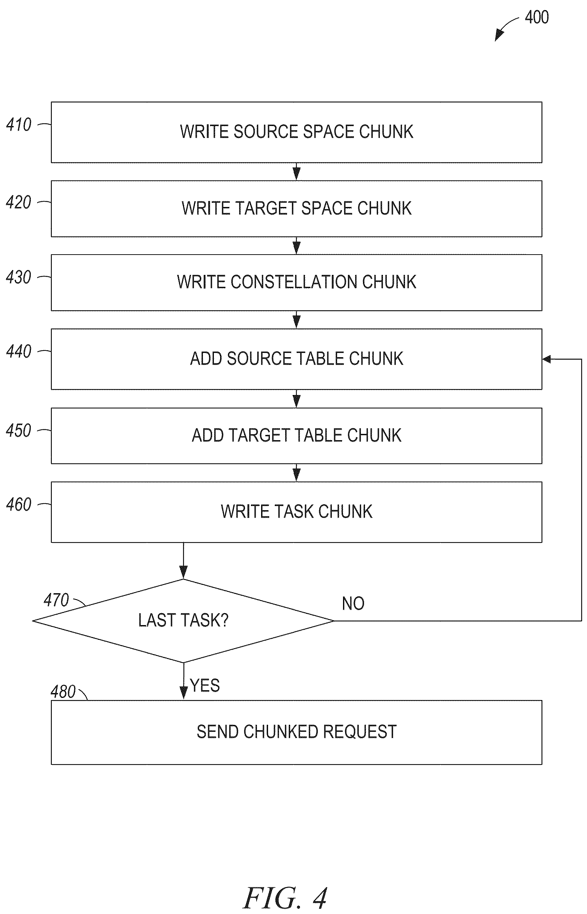

FIG. 4 shows a flowchart illustrating a method 400 of generating a request for a cloud application using a bulk API with chunked transfer encoding, according to some example embodiments. By way of example and not limitation, the method 400 is described as being performed by the client device 160A of FIG. 1 that presents the user interface 205 of FIG. 2. The method 400 includes operations 410, 420, 430, 440, 450, 460, 470, and 480.

In operations 410-460, described in more detail below, different chunks of a request are written. In some example embodiments, each chunk includes an ID that is the same for all chunks of the request, an operation that identifies the type of operation for the individual chunk, and a payload that includes operation-specific data to allow processing of the chunk.

In operation 410, the client device 160A writes a source space chunk. The source space chunk identifies a space as the source space for chunks to follow. An example source space chunk is shown below.

```
 {
   "id": "218d95c0-c492-4b02-b60f-87b661c57ba9",
   "operation": "CREATE_SOURCE_SPACE",
   "payload": {
     "id": "b35570f3-6d12-469a-9f0e-7f997d345d00",
     "name": "hana_source",
     "connectionId": "b35570f3-6d12-469a-9f0e-7f997d345d66",
     "connectionType": "HANA",
     "container": "/DB_SCHEMA",
     "maxConnections": 10
```

The first ID line of the source space chunk contains the unique identifier for the replication flow. The operation field indicates that the chunk is for a CREATE_SOURCE_SPACE operation. The payload includes a unique identifier for the source space, a name of the source space, a connectionId to be used to connect to the source space, a connectionType that identifies the type of the source space, a container that identifies a specific container within the source space, and a maximum number of simultaneous connections allowed for the source space. In various example embodiments, different combinations of the fields may be included, along with additional fields.

The client device 160A, in operation 420, writes a target space chunk. The target space chunk identifies a space as the target space for chunks to follow. An example target space chunk is shown below.

```
 {
   "id": "218d95c0-c492-4b02-b60f-87b661c57ba9",
   "operation": "CREATE_TARGET_SPACE" ,
   "payload": {
     "id": "b35570f3-6d12-469a-9f0e-7f997d345d01",
     "name": "file_target",
     "connectionId": "b35570f3-6d12-469a-9f0e-7f997d345d67",
     "connectionType": "FILE",
     "container": "/FILES",
     "maxConnections": 10
 }
```

The first ID line of the target space chunk contains the unique identifier for the replication flow. The operation field indicates that the chunk is for a CREATE_TARGET_SPACE operation. The payload includes a unique identifier for the target connectionType that identifies the type of the target space, a container that identifies a specific container within the target space, and a maximum number of simultaneous connections allowed for the target space. In various example embodiments, different combinations of the fields may be included, along with additional fields.

In operation 430, the client device 160A writes a constellation chunk. The constellation chunk identifies the source space and the target space written in operations 410 and 420, allowing the transfer path from source to target to be referenced as a single, constellation, entity. An example constellation chunk is shown below.

```
 {
   "id": "218d95c0-c492-4b02-b60f-87b661c57ba9",
   "operation": "CREATE_CONSTELLATION",
   "payload": {
     "id": "b35570f3-6d12-469a-9f0e-7f997d345d12",
     "name": "constellation_name",
     "sourceSpace": "b35570f3-6d12-469a-9f03-7f997d345d00",
     "targetSpace": "b35570f3-6d12-469a-9f03-7f997d345d01"
 }
 
```

The first ID line of the constellation chunk contains the unique identifier for the replication flow. The operation field indicates that the chunk is for a CREATE_CONSTELLATION operation. The payload includes a unique identifier for the constellation, a name of the constellation, the unique identifier for the source space, and the unique identifier for the target space. In various example embodiments, different combinations of the fields may be included, along with additional fields.

The constellation will be used for all of the tasks that will be written in operations 440-470. As indicated by the operation 470, operations 440-460 are repeated for each task that is handled by the method 400. In operation 440, the source table chunk for the task is added by the client device 160A. An example source table chunk is shown below.

```
 {
   "id": "218d95c0-c492-4b02-b60f-87b661c57ba9",
   "operation": "ADD_SOURCE_TABLE",
   "payload": {
     "id": "b35570f3-6d12-469a-9f0e-7f997d345d13",
     "name": "CUSTOMERS",
     "columns": {
        "ID": {
           "description": "ID",
           "type", "uint8"
        by
        "NAME": {
           "description": "Name",
           "type": "string"
 }
```

The first ID line of the source table chunk contains the unique identifier for the replication flow. The operation field indicates that the chunk is for an ADD_SOURCE_TABLE operation. The payload includes a unique identifier for the source table, a name of the source table, and data for the columns of the table. The data for the columns of the table includes a name of each column, a description of each column, and a data type stored in each column. In additional fields. The operation adds the source table with schema definition into the source space.

The client device 160A, in operation 450, adds the target table chunk for the task. An example target table chunk is shown below.

```
 {
   "id": "218d95c0-c492-4b02-b60f-87b661c57ba9",
   "operation": "ADD_TARGET_TABLE",
   "payload": {
     "id": "b35570f3-6d12-469a-9f0e-7f997d345d14",
     "name": "CUSTOMERS",
     "columns": {
        "ID": {
           "description": "ID",
           "type", "uint8"
        by
        "NAME": {
           "description": "Name",
           "type": "string"
 }
```

The first ID line of the target table chunk contains the unique identifier for the replication flow. The operation field indicates that the chunk is for an ADD_TARGET_TABLE table, and data for the columns of the table. The data for the columns of the table includes a name of each column, a description of each column, and a data type stored in each column. In various example embodiments, different combinations of the fields may be included, along with additional fields. In this example, the source and target tables have the same name and same columns. In other examples, the source and target tables could have different names, different columns, or both. The operation adds the target table with schema definition into the target space.

In operation 480, the client device 160A writes a task chunk for the task. The task chunk identifies the constellation, the source table, and the target table. An example task chunk is shown below.

```
 {
   "id": "218d95c0-c492-4b02-b60f-87b661c57ba9",
   "operation": "CREATE_TASK",
   "payload": {
     "id": "b35570f3-6d12-469a-9f0e-7f997d345d15",
     "name": "task_name",
     "active": false,
     "priority": 50,
     "loadType": "INITIAL",
     "schedule": "IMMEDIATE",
     "constellation": "b35570f3-6d12-469a-9f0e-7f997d345d12",
     "sourceTable": "b35570f3-6d12-469a-9f0e-7f997d345d13",
     "targetTable": "b35570f3-6d12-469a-9f0e-7f997d345d14"
   }
 }
```

The first ID line of the task chunk contains the unique identifier for the replication flow. The operation field indicates that the chunk is for a CREATE_TASK operation. The payload includes the unique identifier of the constellation, the unique identifier of the source table, and the unique identifier for the target table. This provides enough information to the RMS 210 to allow for replication of data from the source table in the source space to the target table in the target space. The payload also includes a unique identifier of the task, a name of the task, and additional information to help the RMS 210 schedule the task among other tasks, such as whether the task is active, the priority of the task, a load type of the task, and a request for immediate scheduling. In various examples, a subset or superset of these fields may be included.

As previously mentioned, operations 440-470 are repeated for each task. Thus, operations 410-430 are only performed once, regardless of the number of tasks being requested using the bulk API. Once all tasks have been added to the request, the client device 160A sends the chunked request (operation 480).

Thus, by use of the method 400, the client device 160A is enabled to send a single chunked request for any number of tasks that replicate data from one source space to one target space. By encapsulating all of the tasks into a single request, error handling by the RMS 210 and the client device 160A is simplified. By using a chunked transfer encoding instead of a monolithic transfer encoding, data is sent in smaller chunks and communication errors between the RMS 210 and the client device 160A are more easily handled. The communication sent by the client device 160A using the method 400 may be handled by the RMS 210 using the method 300 of FIG. 3.

The method 400 may be implemented using the pseudo-code below.

```
 func CreateReplicationFlow() (rf *ReplicationFlow){
       chunks := bytes.NewBuffer()
      writer := NewChunkWriter(chunks)
      writer.write(sourceSpaceChunk) // write source space
       definition to buffer
      writer.write(targetSpaceChunk) // write target space
       definition to buffer
      writer.write(constellationChuhnk) // write constellation
       definition to buffer
       for each task in rf.ReplicationTasks{
             writer.write(sourceTableChunk) // write source table
             definition to buffer
             writer.write(targetTableChunk) // write target table
             definition to buffer
             writer.write(taskChunk) // write task definition to
             buffer
       }
       // set request header with Transfer-Encoding: chunked
      header := SetRequestHeader("Transfer-Encoding", "chunked")
       response := SendRequest(hearder, chunks)
       // if response code is not 200, return nil
       if reponse.Code != 200{
             return nil
       }
       // deserialize response body replication flow struct if
       response code is 200
       rf := deserialize(response.Body)
       return rf
 }
```

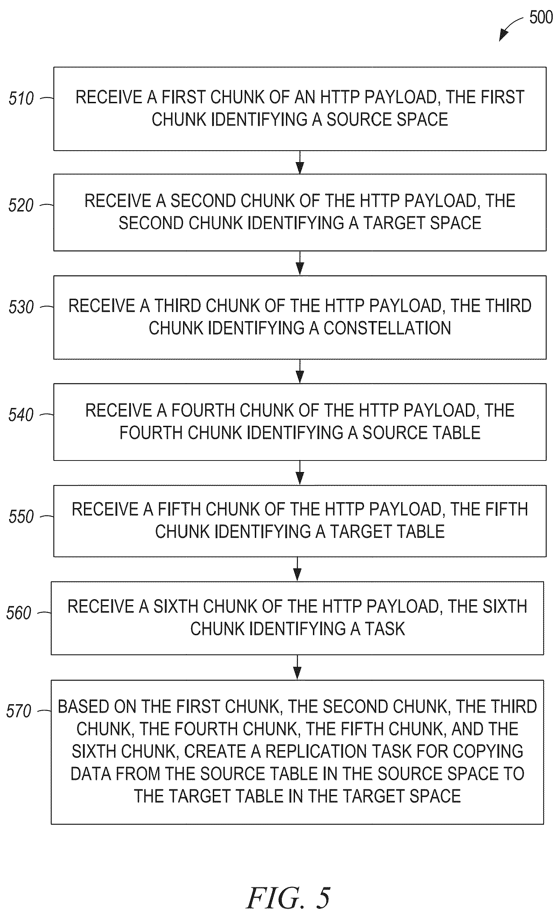

FIG. 5 shows a flowchart illustrating a method 500 of handling a request for a cloud application using a bulk API with chunked transfer encoding, according to some example embodiments. The method 500 includes operations 510, 520, 530, 540, 550, 560, and 570. By way of example and not limitation, the method 500 may be performed by the RMS 210 of FIG. 2 in response to receiving a communication generated using the method 400 of FIG. 4.

In operation 510, the RMS 210 receives a first chunk of an HTTP payload. The first chunk identifies a source space and may be the chunk sent in operation 410. In some example embodiments, the first chunk comprises a name of the source space, a connection identifier that identifies a connection to the source space, a connection type that identifies a type of the connection to a source space, and a maximum number of simultaneous connections to the source space.

The RMS 210 receives a second chunk of the HTTP payload that identifies a target space (operation 520). The second chunk may be the chunk sent in operation 420.

In operation 530, the RMS 210 receives a third chunk of the HTTP payload. The third chunk identifies a constellation that comprises the source space and the target space. The constellation chunk may be the chunk sent in operation 430.

The RMS 210, in operation 540, receives a fourth chunk of the HTTP payload. The fourth chunk identifies a source table and may be the chunk sent in operation 440. The fourth chunk may identify one or more columns of the source table to be replicated.

In operation 550, the RMS 210 receives a fifth chunk of the HTTP payload that identifies a target table. The fifth chunk may be the chunk sent in operation 450. The fifth chunk may identify one or more columns of the target table to be populated with replicated data.

In some example embodiments, the first chunk, the second chunk, the third chunk, the fourth chunk, and the fifth chunk each comprise an identifier with a same value. The same value included in the chunks assists the RMS 210 in determining that the chunks are related. Thus, interleaved chunks for multiple requests can be disambiguated using the unique identifier for each chunked communication.

In operation 560, the RMS 210 receives a sixth chunk of the HTTP payload that identifies a task. The task definition includes information that will be transmitted to RMS workers. These workers will execute the task of copying data from the source table in the source space of the constellation to the target table in the target space of the constellation.

In operation 570, the RMS 210, based on the successful processing of the first chunk, the second chunk, the third chunk, the fourth chunk, the fifth chunk, and the sixth chunk, creates a replication task for copying data from the source table in the source space to the target table in the target space. The creation of the replication task may be accomplished by committing the six corresponding objects and storing them in a repository (e.g., the RMS repository 220). The six corresponding objects, together, define the task of data replication. Accordingly, by use of the method 500, a chunked HHTP payload is processed to perform task creation of data replication.

Operations 540-560 may be repeated to create task for defining additional source and target tables being replicated from the same source space to the same target space. Thus, the method 500 may be modified to include receiving a seventh chunk of the HTTP payload, the seventh chunk identifying a second source table (repeating operation 540 for a different source table). The modified method 500 further includes receiving an eighth chunk of the HTTP payload, the eighth chunk identifying a second target table (repeating operation 550 for a different target table). The modified method 500 further includes receiving a ninth chunk of the HTTP payload, the ninth chunk identifying a second task (repeating operation 560 for a different task). Based on the first chunk, the second chunk, the third chunk, the seventh chunk, the eighth chunk, and the ninth chunk, the RMS 210 commits the transaction and stores the newly created objects in the repository in operation 570.

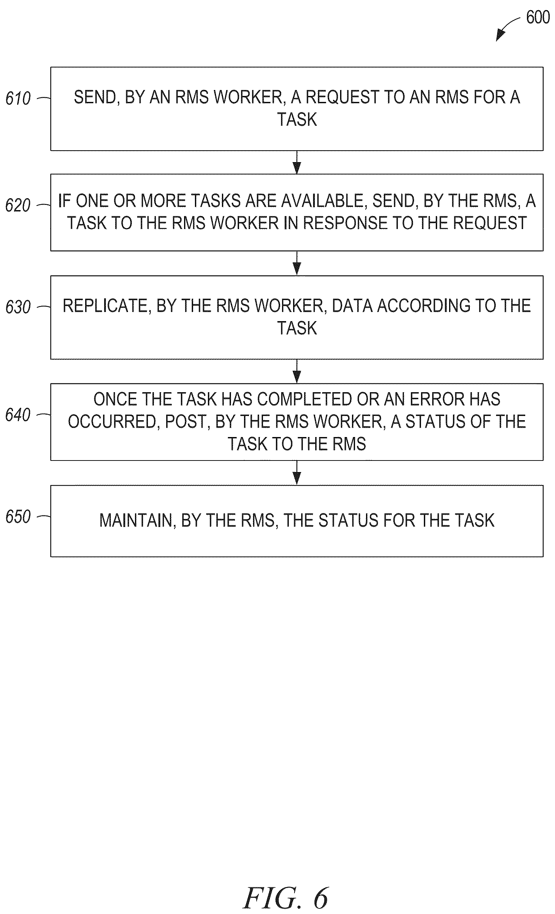

FIG. 6 shows a flowchart illustrating a method 600 of execution of a task created using a bulk API with chunked transfer encoding, according to some example embodiments. The method 600 includes operations 610, 620, 630, 640, and 650. By way of example and not limitation, the method 500 may be performed by the RMS 210 and the RMS worker 230, both of FIG. 2, after creating a task using the method 500 of FIG. 5.

In operation 610, the RMS worker 230 sends a request to the RMS 210 for a task. For example, the RMS worker 230 may send the request in response to having just been initialized, having just completed another task, or having been idle for a predetermined period of time.

The RMS 210, in operation 620, sends a task to the RMS worker 230 in response to the request, if one or more tasks are available. For example, the task created by the method 500 may be available, and thus may be assigned to the RMS worker 230 in operation 620.

The RMS worker 230 replicates data according to the task (operation 630). For example, data may be replicated from a source table in a source space to a target table in a target space according to the six chunks of an HTTP payload received in operations 510-560 of the method 500.

In operation 640, once the task has completed or an error has occurred, the RMS worker 230 posts a status of the task (e.g., success or failure) to the RMS 210. The RMS 210 mains the status for the task (operation 650). Thus, the status of the task may be retrieved by querying the RMS 210. Accordingly, by use of the method 600, the RMS 210 and the RMS worker 230 cooperate to perform tasks submitted via the user interface 205.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: a memory that stores instructions; and one or more processors coupled to the memory to execute the instructions to perform operations comprising: receiving a first chunk of a hypertext transport protocol (HTTP) payload, the first chunk identifying a source space; receiving a second chunk of the HTTP payload, the second chunk identifying a target space; receiving a third chunk of the HTTP payload, the third chunk identifying a source table; receiving a fourth chunk of the HTTP payload, the fourth chunk identifying a target table; and based on the successfully processing of the first chunk, the second chunk, the third chunk, the fourth chunk, creating a replication task that will be executed by RMS workers to copy data from the source table in the source space to the target table in the target space.

In Example 2, the subject matter of Example 1, wherein the operations further comprise: receiving a fifth chunk of the HTTP payload, the fifth chunk identifying a constellation that comprises the source space and the target space.

In Example 3, the subject matter of Examples 1-2, wherein the operations further comprise: attempting to create a first data object that represents the source space; attempting to create a second data object that represents the target space; attempting to create a third data object that represents the source table; and prior to create a replication task, determining that the attempts to create the first data object, the second data object, and the third data object were all successful.

In Example 4, the subject matter of Examples 1-3, wherein the operations further comprise: receiving a fifth chunk of the HTTP payload, the fifth chunk identifying a second source table; receiving a sixth chunk of the HTTP payload, the sixth chunk identifying a second target table; and based on the first chunk, the second chunk, the fifth chunk, and the sixth chunk, creating a task with definition including essential information for copying data from the second source table in the source space to the second target table in the target space.

In Example 5, the subject matter of Examples 1-4, wherein the first chunk, the second chunk, the third chunk, and the fourth chunk each comprise an identifier with a same value.

In Example 6, the subject matter of Examples 1-5, wherein the first chunk comprises a name of the source space, a connection identifier that identifies a connection to the source space, a connection type that identifies a type of the connection to a source space, and a maximum number of simultaneous connections to the source space.

In Example 7, the subject matter of Examples 1-6, wherein the third chunk identifies a column of the source table.

In Example 8, the subject matter of Examples 1-7, wherein the fourth chunk identifies a column of the target table.

Example 9 is a non-transitory computer-readable medium that stores instructions that, when executed by one or more processors, cause the one or more processors to perform operations comprising: receiving a first chunk of a hypertext transport protocol (HTTP) payload, the first chunk identifying a source space; receiving a second chunk of the HTTP payload, the second chunk identifying a target space; receiving a third chunk of the HTTP payload, the third chunk identifying a source table; receiving a fourth chunk of the HTTP payload, the fourth chunk identifying a target table; and based on the first chunk, the second chunk, the third chunk, and the fourth chunk, creating a task for copying data from the source table in the source space to the target table in the target space.

In Example 10, the subject matter of Example 9, wherein the operations further comprise: receiving a fifth chunk of the HTTP payload, the fifth chunk identifying a constellation that comprises the source space and the target space.

In Example 11, the subject matter of Examples 9-10, wherein the operations further comprise: attempting to create a first data object that represents the source space; attempting to create a second data object that represents the target space; attempting to create a third data object that represents the source table; and prior to the task creation containing information for copying of the data from the source table in the source space to the target table in the target space, determining that the attempts to create the first data object, the second data object, and the third data object were all successful.

In Example 12, the subject matter of Examples 9-11, wherein the operations further comprise: receiving a fifth chunk of the HTTP payload, the fifth chunk identifying a second source table; receiving a sixth chunk of the HTTP payload, the sixth chunk identifying a second target table; and based on the first chunk, the second chunk, the fifth chunk, and the sixth chunk, creating a second task definition for copying data from the second source table in the source space to the second target table in the target space.

In Example 13, the subject matter of Examples 9-12, wherein the first chunk, the second chunk, the third chunk, and the fourth chunk each comprise an identifier with a same value.

In Example 14, the subject matter of Examples 9-13, wherein the first chunk comprises a name of the source space, a connection identifier that identifies a connection to the source space, a connection type that identifies a type of the connection to a source space, and a maximum number of simultaneous connections to the source space.

In Example 15, the subject matter of Examples 9-14, wherein the third chunk identifies a column of the source table.

In Example 16, the subject matter of Examples 9-15, wherein the fourth chunk identifies a column of the target table.

Example 17 is a method comprising: receiving, by one or more processors, a first chunk of a hypertext transport protocol (HTTP) payload, the first chunk identifying a source space; receiving a second chunk of the HTTP payload, the second chunk identifying a target space; receiving a third chunk of the HTTP payload, the third chunk identifying a source table; receiving a fourth chunk of the HTTP payload, the fourth chunk identifying a target table; and based on the first chunk, the second chunk, the third chunk, and the fourth chunk, creating a replication task for copying data from the source table in the source space to the target table in the target space.

In Example 18, the subject matter of Example 17 includes receiving a fifth chunk of the HTTP payload, the fifth chunk identifying a constellation that comprises the source space and the target space.

In Example 19, the subject matter of Examples 17-18 includes attempting to create a first data object that represents the source space; attempting to create a second data object that represents the target space; attempting to create a third data object that represents the source table; and prior to the task creation for copying of the data from the source table in the source space to the target table in the target space, determining that the attempts to create the first data object, the second data object, and the third data object were all successful.

In Example 20, the subject matter of Examples 17-19 includes receiving a fifth chunk of the HTTP payload, the fifth chunk identifying a second source table; receiving a sixth chunk of the HTTP payload, the sixth chunk identifying a second target table; and based on the first chunk, the second chunk, the fifth chunk, and the sixth chunk, creating a second task for copying data from the second source table in the source space to the second target table in the target space.

Example 21 is an apparatus comprising means to implement any of Examples 1-20.

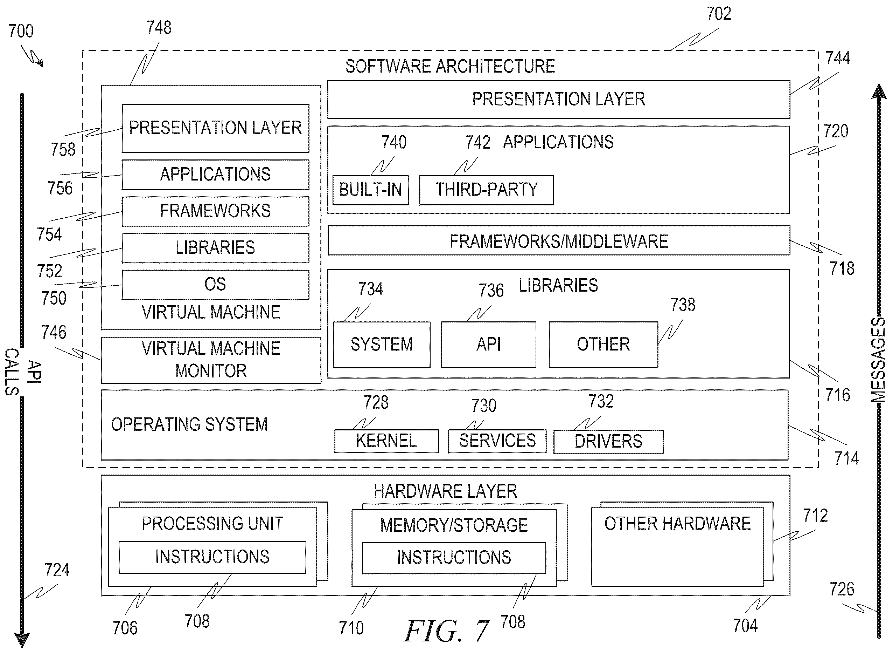

FIG. 7 shows a block diagram 700 showing one example of a software architecture 702 for a computing device. The software architecture 702 may be used in conjunction with various hardware architectures, for example, as described herein. FIG. 7 is merely a non-limiting example of a software architecture, and many other architectures may be implemented to facilitate the functionality described herein. A representative hardware layer 704 is illustrated and can represent, for example, any of the above referenced computing devices. In some examples, the hardware layer 704 may be implemented according to the architecture of the computer system of FIG. 7.

The representative hardware layer 704 comprises one or more processing units 706 having associated executable instructions 708. Executable instructions 708 represent the executable instructions of the software architecture 702, including implementation of the methods, modules, subsystems, and components, and so forth described herein and may also include memory and/or storage modules 710, which also have executable instructions 708. Hardware layer 704 may also comprise other hardware as indicated by other hardware 712 which represents any other hardware of the hardware layer 704, such as the other hardware illustrated as part of the software architecture 702.

In the example architecture of FIG. 7, the software architecture 702 may be conceptualized as a stack of layers where each layer provides particular functionality. For example, the software architecture 702 may include layers such as an operating system 714, libraries 716, frameworks/middleware 718, applications 720, and presentation layer 744. Operationally, the applications 720 and/or other components within the layers may invoke API calls 724 through the software stack and access a response, returned values, and so forth illustrated as messages 726 in response to the API calls 724. The layers illustrated are representative in nature and not all software architectures have all layers. For example, some mobile or special purpose operating systems may not provide a frameworks/middleware 718 layer, while others may provide such a layer. Other software architectures may include additional or different layers.

The operating system 714 may manage hardware resources and provide common services. The operating system 714 may include, for example, a kernel 728, services 730, and drivers 732. The kernel 728 may act as an abstraction layer between the hardware and the other software layers. For example, the kernel 728 may be responsible for memory management, processor management (e.g., scheduling), component management, networking, security settings, and so on. The services 730 may provide other common services for the other software layers. In some examples, the services 730 include an interrupt service. The interrupt service may detect the receipt of an interrupt and, in response, cause the software architecture 702 to pause its current processing and execute an interrupt service routine (ISR) when an interrupt is accessed.

The drivers 732 may be responsible for controlling or interfacing with the underlying hardware. For instance, the drivers 732 may include display drivers, camera drivers, Bluetooth^{®} drivers, flash memory drivers, serial communication drivers (e.g., Universal Serial Bus (USB) drivers), Wi-Fi^{®} drivers, near-field communication (NFC) drivers, audio drivers, power management drivers, and so forth depending on the hardware configuration.

The libraries 716 may provide a common infrastructure that may be utilized by the applications 720 and/or other components and/or layers. The libraries 716 typically provide functionality that allows other software modules to perform tasks in an easier fashion than to interface directly with the underlying operating system 714 functionality (e.g., kernel 728, services 730 and/or drivers 732). The libraries 716 may include system libraries 734 (e.g., C standard library) that may provide functions such as memory allocation functions, string manipulation functions, mathematic functions, and the like. In addition, the libraries 716 may include API libraries 736 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 716 may also include a wide variety of other libraries 738 to provide many other APIs to the applications 720 and other software components/modules.

The frameworks/middleware 718 may provide a higher-level common infrastructure that may be utilized by the applications 720 and/or other software components/modules. For example, the frameworks/middleware 718 may provide various graphic user interface (GUI) functions, high-level resource management, high-level location services, and so forth. The frameworks/middleware 718 may provide a broad spectrum of other APIs that may be utilized by the applications 720 and/or other software components/modules, some of which may be specific to a particular operating system or platform.

The applications 720 include built-in applications 740 and/or third-party applications 742. Examples of representative built-in applications 740 may include, but are not limited to, a contacts application, a browser application, a book reader application, a location application, a media application, a messaging application, and/or a game application. Third-party applications 742 may include any of the built-in applications 740 as well as a broad assortment of other applications. In a specific example, the third-party application 742 (e.g., an application developed using the Android^{™} or iOS^{™} software development kit (SDK) by an entity other than the vendor of the particular platform) may be mobile software running on a mobile operating system such as iIOS^{™}, Android^{™}, Windows^{®} Phone, or other mobile computing device operating systems. In this example, the third-party application 742 may invoke the API calls 724 provided by the mobile operating system such as operating system 714 to facilitate functionality described herein.

The applications 720 may utilize built-in operating system functions (e.g., kernel 728, services 730 and/or drivers 732), libraries (e.g., system libraries 734, API libraries 736, and other libraries 738), and frameworks/middleware 718 to create user interfaces to interact with users of the system. Alternatively, or additionally, in some systems, interactions with a user may occur through a presentation layer, such as presentation layer 744. In these systems, the application/module "logic" can be separated from the aspects of the application/module that interact with a user.

Some software architectures utilize virtual machines. In the example of FIG. 7, this is illustrated by virtual machine 748. A virtual machine creates a software environment where applications/modules can execute as if they were executing on a hardware computing device. A virtual machine is hosted by a host operating system (operating system 714) and typically, although not always, has a virtual machine monitor 746, which manages the operation of the virtual machine 748 as well as the interface with the host operating system (i.e., operating system 714). A software architecture executes within the virtual machine 748 such as an operating system 750, libraries 752, frameworks/middleware 754, applications 756 and/or presentation layer 758. These layers of software architecture executing within the virtual machine 748 can be the same as corresponding layers previously described or may be different.

### MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array [FPGA] or an application-specific integrated circuit [ASIC]) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiples of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

### EXAMPLE MACHINE ARCHITECTURE AND MACHINE-READABLE MEDIUM

FIG. 8 shows a block diagram of a machine in the example form of a computer system 800 within which instructions 824 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processor 802 (e.g., a central processing unit (CPU), a graphics processing unit (GPU), or both), a main memory 804, and a static memory 806, which communicate with each other via a bus 808. The computer system 800 may further include a video display unit 810 (e.g., a liquid crystal display (LCD) or a cathode ray tube [CRT]). The computer system 800 also includes an alphanumeric input device 812 (e.g., a keyboard or a touch-sensitive display screen), a user interface (UI) navigation (or cursor control) device 814 (e.g., a mouse), a storage unit 816, a signal generation device 818 (e.g., a speaker), and a network interface device 820.

### MACHINE-READABLE MEDIUM

The storage unit 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804 and/or within the processor 802 during execution thereof by the computer system 800, with the main memory 804 and the processor 802 also constituting a machine-readable medium 822.

While the machine-readable medium 822 is shown in FIG. 8 to be a single medium, the term "machine-readable medium" may include a single medium or multiple media (e.g., a centralized or distributed database, and/or associated caches and servers) that store the one or more instructions 824 or data structures. The term "machine-readable medium" shall also be taken to include any tangible medium that is capable of storing, encoding, or carrying instructions 824 for execution by the machine and that cause the machine to perform any one or more of the methodologies of the present disclosure, or that is capable of storing, encoding, or carrying data structures utilized by or associated with the instructions 824. The term "machine-readable medium" shall accordingly be taken to include, but not be limited to, solid-state memories, and optical and magnetic media. Specific examples of machine-readable media include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM ) disks. A machine-readable medium is not a transmission medium.

### TRANSMISSION MEDIUM

The instructions 824 may further be transmitted or received over a communications network 826 using a transmission medium. The instructions 824 may be transmitted using the network interface device 820 and any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 824 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a non-exclusive "or," unless specifically stated otherwise.

## Claims

1. A system comprising:
a memory that stores instructions; and
one or more processors coupled to the memory to execute the instructions to perform operations comprising:
receiving a first chunk of a hypertext transport protocol (HTTP) payload, the first chunk identifying a source space;
receiving a second chunk of the HTTP payload, the second chunk identifying a target space;
receiving a third chunk of the HTTP payload, the third chunk identifying a source table;
receiving a fourth chunk of the HTTP payload, the fourth chunk identifying a target table; and
based on the first chunk, the second chunk, the third chunk, and the fourth chunk, creating a replication task for copying data from the source table in the source space to the target table in the target space.

2. The system of claim 1, wherein the operations further comprise:
receiving a fifth chunk of the HTTP payload, the fifth chunk identifying a constellation that comprises the source space and the target space.

3. The system of claim 1 or 2, wherein the operations further comprise:
attempting to create a first data object that represents the source space;
attempting to create a second data object that represents the target space;
attempting to create a third data object that represents the source table; and
prior to the task creation for copying of the data from the source table in the source space to the target table in the target space, determining that the attempts to create the first data object, the second data object, and the third data object were all successful.

4. The system of any one of claims 1 to 3, wherein the operations further comprise:
receiving a fifth chunk of the HTTP payload, the fifth chunk identifying a second source table;
receiving a sixth chunk of the HTTP payload, the sixth chunk identifying a second target table; and
based on the first chunk, the second chunk, the fifth chunk, and the sixth chunk, creating task for copying data from the second source table in the source space to the second target table in the target space.

5. The system of any one of claims 1 to 4, wherein the first chunk, the second chunk, the third chunk, and the fourth chunk each comprise an identifier with a same value; and/or
wherein the first chunk comprises a name of the source space, a connection identifier that identifies a connection to the source space, a connection type that identifies a type of the connection to a source space, and a maximum number of simultaneous connections to the source space.

6. The system of any one of claims 1 to 5, wherein the third chunk identifies a column of the source table; and/or
wherein the fourth chunk identifies a column of the target table.

7. A non-transitory computer-readable medium that stores instructions that, when executed by one or more processors, cause the one or more processors to perform operations comprising:
receiving a first chunk of a hypertext transport protocol (HTTP) payload, the first chunk identifying a source space;
receiving a second chunk of the HTTP payload, the second chunk identifying a target space;
receiving a third chunk of the HTTP payload, the third chunk identifying a source table;
receiving a fourth chunk of the HTTP payload, the fourth chunk identifying a target table; and
based on the first chunk, the second chunk, the third chunk, and the fourth chunk, creating a task for copying data from the source table in the source space to the target table in the target space.

8. The non-transitory computer-readable medium of claim 7, wherein the operations further comprise:
receiving a fifth chunk of the HTTP payload, the fifth chunk identifying a constellation that comprises the source space and the target space.

9. The non-transitory computer-readable medium of claim 7 or 8, wherein the operations further comprise:
attempting to create a first data object that represents the source space;
attempting to create a second data object that represents the target space;
attempting to create a third data object that represents the source table; and
prior to the task creation for copying of the data from the source table in the source space to the target table in the target space, determining that the attempts to create the first data object, the second data object, and the third data object were all successful.

10. The non-transitory computer-readable medium of any one of claims 7 to 9, wherein the operations further comprise:
receiving a fifth chunk of the HTTP payload, the fifth chunk identifying a second source table;
receiving a sixth chunk of the HTTP payload, the sixth chunk identifying a second target table; and
based on the first chunk, the second chunk, the fifth chunk, and the sixth chunk, creating a task for copying data from the second source table in the source space to the second target table in the target space.

11. The non-transitory computer-readable medium of any one of claims 7 to 10, wherein the first chunk, the second chunk, the third chunk, and the fourth chunk each comprise an identifier with a same value; and/or
wherein the first chunk comprises a name of the source space, a connection identifier that identifies a connection to the source space, a connection type that identifies a type of the connection to a source space, and a maximum number of simultaneous connections to the source space; and/or
wherein the third chunk identifies a column of the source table; and/or
wherein the fourth chunk identifies a column of the target table.

12. A method comprising:
receiving, by one or more processors, a first chunk of a hypertext transport protocol (HTTP) payload, the first chunk identifying a source space;
receiving a second chunk of the HTTP payload, the second chunk identifying a target space;
receiving a third chunk of the HTTP payload, the third chunk identifying a source table;
receiving a fourth chunk of the HTTP payload, the fourth chunk identifying a target table; and
based on the first chunk, the second chunk, the third chunk, and the fourth chunk, creating a task for copying data from the source table in the source space to the target table in the target space.

13. The method of claim 12, further comprising:
receiving a fifth chunk of the HTTP payload, the fifth chunk identifying a constellation that comprises the source space and the target space.

14. The method of claim 12 or 13, further comprising:
attempting to create a first data object that represents the source space;
attempting to create a second data object that represents the target space;
attempting to create a third data object that represents the source table; and
prior to the task creation for copying of the data from the source table in the source space to the target table in the target space, determining that the attempts to create the first data object, the second data object, and the third data object were all successful.

15. The method of any one of claims 12 to 14, further comprising:
receiving a fifth chunk of the HTTP payload, the fifth chunk identifying a second source table;
receiving a sixth chunk of the HTTP payload, the sixth chunk identifying a second target table; and
based on the first chunk, the second chunk, the fifth chunk, and the sixth chunk, creating a task for copying data from the second source table in the source space to the second target table in the target space.
